# FASCICULE DE BREVET EUROPEEN

(11) **EP 1 634 795 B1**
(45) Date de publication et mention de la délivrance du brevet: **27.05.2009**
(21) Numéro de dépôt: 05291847.1
(22) Date de dépôt: 07.09.2005
(51) Int. Cl.: B62D 1/18

(54) **Module de colonne de direction à commande de positionnement motorisé**
Lenksäulenmodul mit einer motorisierten Positionierungssteuerung
Steering column module with motorised positioning control

(30) Priorité: 08.09.2004 FR 0409517
(43) Date de publication de la demande: 15.03.2006
(73) Titulaire: ZF Systèmes de Direction Nacam, S.A.S., 41100 Vendome (FR)
(72) Inventeur: Barcat, Florian, 37000 Tours (FR)
(74) Mandataire: Novagraaf IP

(56) Documents cités:
- EP-A- 0 213 482
- DE-A1- 19 641 152
- FR-A- 2 662 986

## Description

La présente invention concerne un module de colonne de direction motorisé.

De tels modules permettent d'ajuster la position du volant en fonction de la morphologie et des préférences du conducteur, par un déplacement selon une direction axiale et une direction radiale.

Le déplacement selon la direction axiale permet de rapprocher ou d'éloigner le volant du conducteur. Le déplacement radial est réalisé par basculement d'une partie de la colonne selon un axe de pivotement perpendiculaire à la colonne de direction. Elle permet de monter ou de descendre le volant.

On connaît dans l'état de la technique des modules de colonne de direction motorisés, comportant un ou deux moteurs pour assurer le déplacement selon les deux directions de réglage. Dans les solutions à moteur unique, un ou plusieurs embrayages électromagnétiques permettent d'accoupler le mécanisme d'entraînement selon les différents modes de réglage.

Dans la solution mettant en oeuvre deux moteurs, chacun correspond à l'un des sens de réglage.

Ces moteurs peuvent être constitués par des actionneurs rotatifs ou linéaires, électriques, hydrauliques ou pneumatiques. Ils sont commandés par un contrôleur électronique recevant des instructions provenant de contacteurs permettant au conducteur de commander les différents déplacements. Le contrôleur reçoit également ou comme une alternative des instructions provenant d'un contrôleur central du véhicule, destinée à enregistrer des positions de référence.

Il reçoit également des instructions de déplacement pour déplacer le volant dans une position dite « easy entry » dégageant au maximum l'accès à la place du conducteur à chaque montée et descente de véhicule.

Les brevets allemands DE19641152 ou DE4217664 décrivent des exemples de modules connus dans l'art antérieur.

Les moteurs décrits sont des moteurs à courant continu, pilotés par une commande de type relais électromécaniques, relais statiques ou composants électroniques de puissance commandée en commutation. Les moteurs sont alimentés à leur tension nominale pour le démarrage et pendant le réglage, et sont mis en court-circuit pour le freinage et l'arrêt.

Par ailleurs est décrit dans le document EP 0 213 482, qui montre le préambule de la revendication 1, une colonne de direction à positionnement motorisé dont le moteur est commandé par un interrupteur actionné par le conducteur. Dans une variante permettant une commande du moteur à vitesse variable, plusieurs vitesses différentes peuvent être sélectionnées, à l'aide d'une pluralité d'interrupteurs.

Le problème qui se pose est celui des bruits transitoires se produisant lors du démarrage ou de l'arrêt du déplacement, du fait de la reprise de jeux, de déformations rapides des composants mécaniques du système de réglage de la colonne de direction et du couple élevé du moteur lors du démarrage. Ces bruits sont transmis à l'habitacle par la colonne de direction par définition très rigide, et sont donc très difficiles à filtrer.

Afin de remédier à cet inconvénient des modules de l'état de la technique, l'invention propose un module amélioré se caractérisant par une loi de commande améliorée du ou des moteurs de réglage.
A cet effet, l'invention concerne selon son acception la plus générale un module de colonne de direction selon la partie caractérisante de la revendication 1.

Cette invention vise aussi à augmenter la sensation de confort de réglage de la position du volant par une variation de vitesse de réglage. La sensation de robustesse s'en trouve aussi augmentée par une plus grande insensibilité aux variations de la tension d'alimentation.

Selon une variante, le contrôleur est programmé pour assurer une compensation des variations de tension d'alimentation du moteur.

De préférence, le contrôleur est programmé pour commander une vitesse de déplacement inférieure à la vitesse maximum à l'approche de la position de fin de course.

Avantageusement, le moteur est accouplé à un capteur délivrant un signal fonction de la vitesse réelle du moteur, ledit signal étant transmis audit contrôleur.

Selon une variante préférée, le contrôleur commande la réduction de la vitesse de déplacement à l'approche de la fin de course.

Selon une autre variante, le contrôleur commande un mode de déplacement à vitesse réduite lorsqu'il reçoit des instructions particulières de réglage.

Avantageusement, le contrôleur génère des signaux de commande de moteur sous la forme de tension constante hachée à rapport cyclique variable.

De préférence, les organes actionnés par le moteur comportent au moins un capteur de position de référence.

L'invention sera mieux comprise à la lecture de la description qui suit se référant aux dessins annexés où :
- la figure 1 représente un exemple de courbe de variation de la vitesse du moteur,
- la figure 2 représente une vue schématique des circuits de commande d'un module selon l'invention.

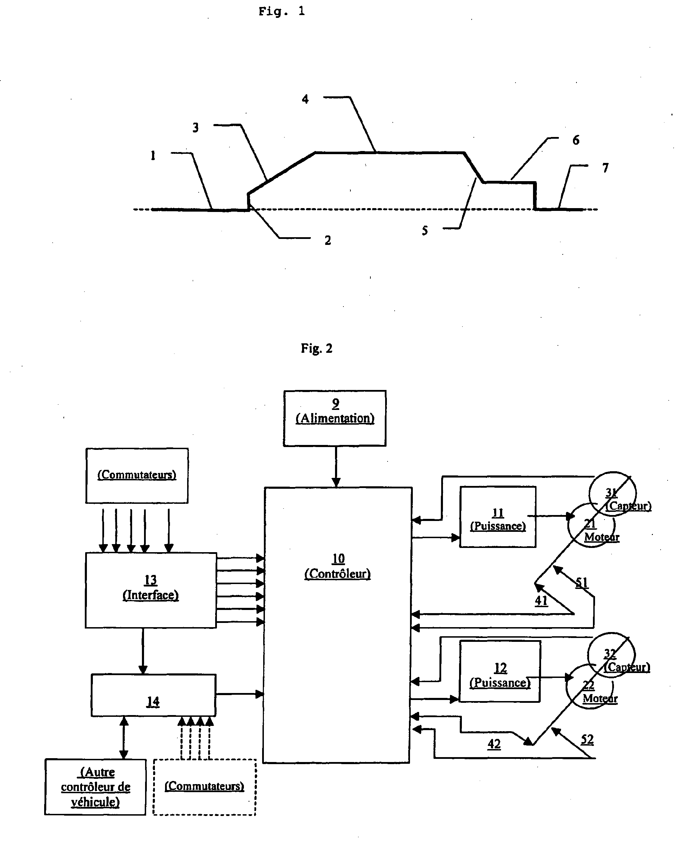

L'invention sera décrite dans ce qui suit en référence à un module de réglage de colonne de direction comportant un premier moteur à courant continu pour l'ajustement de la position axiale du volant, et un deuxième moteur à courant continu pour l'ajustement en hauteur du volant, par basculement d'un tronçon de la colonne de direction par rapport à un axe transversal. Le mécanisme de commande ne sera pas décrit en détail car il est connu dans l'art antérieur, et car l'invention s'applique à toute forme de réalisation de tels mécanismes. En particulier, l'invention est également applicable à des mécanismes comprenant un moteur unique et un ou plusieurs embrayages, ou des moteurs linéaires, hydrauliques ou pneumatiques. Les moteurs peuvent également être constitués de moteurs pas-à-pas, commandés par une horloge à fréquence variable.
Dans l'exemple décrit à titre non limitatif, chacun des moteurs est piloté par un circuit électronique de puissance commandé par un contrôleur générant un signal modulé et à rapport cyclique variable (PWM (Pulse Width Modulation) ou MLI (Modulation de largeur d'impulsion) qui permet de régler la tension aux bornes du moteur de 0% à 100%. La figure 1 représente un exemple de variation de la vitesse du moteur, lors d'un cycle d'activation puis d'arrêt du déplacement.

Au repos, la tension d'alimentation du moteur est nulle (plage (1)). Lors du démarrage du moteur, l'alimentation se fait avec un rapport cyclique minimum (2) conduisant à une vitesse minimale non nulle. Le rapport cyclique augmente ensuite (3) progressivement, par exemple selon une loi linéaire, jusqu'à ce que le rapport cyclique atteigne une valeur maximale, correspondant par exemple à la vitesse nominale ou maximale. La vitesse est ensuite maintenue constante (4) jusqu'à la commande d'arrêt. Cette commande d'arrêt peut provenir d'un capteur de position, d'une commande manuelle, ou d'une instruction calculée en fonction de la position préenregistrée recherchée. La vitesse décroît alors (5), par exemple selon une loi linéaire, jusqu'à atteindre une vitesse de réglage plus lente (6). Ensuite, l'alimentation du moteur est à nouveau réduite à une tension nulle (7).

Une telle fonction présentant une succession de rampes croissantes, constantes et décroissantes n'est pas limitative. Une fonction de type « gaussienne » est par exemple envisageable.

La figure 2 représente un schéma de principe d'un circuit de commande pour un module conforme à l'invention.

I1 comprend de manière habituelle une alimentation (9) et un contrôleur (10) ainsi que des circuits de puissance (11, 12) commandant respectivement des moteurs (21, 22). Les moteurs (21, 22) sont accouplés à des capteurs de position / vitesse respectivement (31, 32). Les organes entraînés par les moteurs (21, 22) sont par ailleurs équipés d'un ou de deux capteurs de position de référence (41, 51 ; 42, 52).

Le contrôleur (10) reçoit des instructions provenant d'un circuit de mise en forme (13) réalisant principalement l'adaptation d'impédance (ou de mise à niveau de tension ou de courant) des signaux provenant des commutateurs « montée, descente », et « rentrée, sortie », ou encore « sortie facilitée » ou « aller dans une position mémorisée donnée ». Le contrôleur reçoit également des instructions provenant d'un autre contrôleur du véhicule ou d'autres commutateurs. Ces instructions sont reçues sous forme câblée ou multiplexée par l'intermédiaire de messages sur un bus de communication. Dans le cas d'instructions reçues sous forme câblée, ce module (14) est un circuit de mise en forme (13) réalisant principalement l'adaptation d'impédance (ou de mise à niveau de tension ou de courant) de signaux permettant l'enregistrement de positions prédéfinies, par exemple les positions préférées des différents conducteurs du véhicule. Ces positions sont enregistrées en mémoire de façon connue et appelées à partir de commande non représentée sur ce schéma. Dans le cas d'instructions reçues sous forme multiplexée par l'intermédiaire de messages sur un bus de communication, ce module (14) est un circuit contrôleur / transceiver de bus. L'ensemble des messages n'est pas défini ici, mais ils contiennent des commandes « montée, descente », et « rentrée, sortie », ou encore « sortie facilitée » ou « aller dans une position mémorisée donnée » ou «enregistrement de positions prédéfinies» et des messages en retour sur l'état du contrôleur et de la commande en cours.

Le contrôleur reçoit également en entrée la tension réelle de la batterie d'alimentation (9), ainsi que les signaux de position provenant des capteurs (31, 41, 51 ; 32, 42, 52).

Le contrôleur calcule des signaux de commande des circuits de puissance (11, 12) en déterminant en temps réel le rapport cyclique en fonction de l'état des différentes entrées.

La régulation de vitesse maintient la consigne de vitesse de la colonne quelle que soit la tension d'alimentation fournie par la batterie : le rapport cyclique évolue inversement proportionnellement à la tension d'alimentation pour compenser les variations de tension.

Dans un mode de réalisation particulier, le réglage vers une position mémorisée se fait à 100% de rapport cyclique, et tout réglage par actions transitoires sur les boutons de commande se fait à une vitesse réduite.

## Revendications

1. Module de colonne de direction à commande de positionnement motorisé comportant des moyens de déplacement du volant selon un sens axial en rapprochement et éloignement et selon un plan radial, pour régler la position vers le haut et vers le bas, à l'aide d'au moins un moteur électrique (21, 22) commandé par un contrôleur électronique (10) **caractérisé en ce que** contrôleur (10) est programmé pour commander une variation de la vitesse dudit moteur (21, 22) au voisinage des positions de départ et d'arrivée au moins, le contrôleur (10) étant programmé pour commander une accélération du déplacement lors du démarrage du moteur (21, 22) et pour commander une décélération du déplacement lors de l'approche de la position d'arrivée.

2. Module de colonne de direction selon la revendication 1, **caractérisé en ce que** le contrôleur (10) est programmé de manière à ce que la vitesse augmente progressivement au voisinage de la position de départ.

3. Module de colonne de direction selon la revendication 1, **caractérisé en ce que** le contrôleur (10) est programmé pour assurer au niveau du moteur (21, 22) une compensation des variations de tension d'alimentation du contrôleur (10).

4. Module de colonne de direction selon la revendication 1, **caractérisé en ce que** le contrôleur (10) est programmé pour commander une vitesse de déplacement inférieure à la vitesse maximum à l'approche d'une position de fin de course.

5. Module de colonne de direction selon l'une quelconque des revendications précédentes, **caractérisé en ce que** le moteur (21, 22) est accouplé à un capteur (31, 32) délivrant un signal fonction de la vitesse réelle du moteur (21, 22), ledit signal étant transmis audit contrôleur (10).

6. Module de colonne de direction selon l'une quelconque des revendications précédentes, **caractérisé en ce que** le contrôleur (10), commande la réduction de la vitesse de déplacement à l'approche de la fin de course.

7. Module de colonne de direction selon l'une quelconque des revendications précédentes, **caractérisé en ce que** le contrôleur (10), commande un mode de déplacement à vitesse réduite lorsqu'il reçoit des instructions particulières de réglage.

8. Module de colonne de direction selon l'une quelconque des revendications précédentes, **caractérisé en ce que** le contrôleur (10) génère des signaux de commande de moteur sous la forme de tension constante hachée à rapport cyclique variable.

9. Module de colonne de direction selon l'une quelconque des revendications précédentes, **caractérisé en ce que** le contrôleur (10) commande la vitesse variable du moteur (21, 22) par une régulation en boucle fermée.

10. Module de colonne de direction selon l'une quelconque des revendications précédentes **caractérisé en ce que** les organes actionnés par le moteur/comportent au moins un capteur de position de référence (41, 51, 42, 52).

## Claims

1. A steering column module with a motorized positional control including means for displacing the steering wheel along a radial direction, to and fro, and along a radial plane, to adjust the positions upwards and downwards using at least one electric motor controlled by an electronic controller (10), **characterized in that** the controller (10) is so programmed as to control a variation in the speed of said motor (21, 22), in the vicinity of at least the start position and the finish position, with the controller (10) being so programmed as to control an acceleration of the displacement upon the starting of the motor (21, 22) and to control a deceleration of the displacement when getting close to the finish position.

2. A steering column module according to any claim 1, **characterized in that** the controller (10) is so programmed that the speed progressively increases in the vicinity of the start position.

3. A steering column module according to claim 1, **characterized in that** the controller (10) is so programmed as to provide, at the motor (21, 22), a compensation for the variations in the controller (10) supply voltage.

4. A steering column module according to claim 1, **characterized in that** the controller (10) is so programmed as to control a displacement speed lower than the maximum speed when close to the position of a limit switch.

5. A steering column module according to any one of the preceding claims, **characterized in that** the motor (21, 22) is coupled to a sensor (31, 32) delivering a signal which depends on the actual speed of the motor (21, 22), said signal being transmitted to said controller (10).

6. A steering column module according to any one of the preceding claims, **characterized in that** the controller (10) controls the reduction in the displacement speed when getting close to the limit switch.

7. A steering column module according to any one of the preceding claims, **characterized in that** the controller (10) controls a reduced speed displacement mode when it receives particular adjustment instructions.

8. A steering column module according to any one of the preceding claims, **characterized in that** the controller (10) generates motor control signals in the form of a chopped constant voltage with a variable duty cycle.

9. A steering column module according to any one of the preceding claims, **characterized in that** the controller (10) controls the variable speed of the motor (21, 22) through a closed-loop control.

10. A steering column module according to any one of the preceding claims, **characterized in that** the devices actuated by the engine (21, 22) include at least a reference position sensor (41, 51, 42, 52).

## Patentansprüche

1. Lenkradsäulenmodul mit motorisierter Positionierungssteuerung, das Verschiebungsmittel des Lenkrades gemäß einer axialen Richtung in Annäherung und Entfernung und gemäß einer radialen Richtung umfasst, um die Position nach oben und nach unten mithilfe wenigstens eines Elektromotors (21, 22) zu regeln, der durch einen elektronischen Steuerschalter (10) gesteuert wird, **dadurch gekennzeichnet, dass** der Steuerschalter (10) programmiert ist, um eine Abweichung der Geschwindigkeit des genannten Motors (21, 22) in der Umgebung wenigstens der Ausgangs- und der Ankunftspositionen zu steuern, wobei der Steuerschalter (10) programmiert ist, um eine Beschleunigung der Verschiebung beim Anlassen des Motors (21, 22) zu steuern und um eine Verlangsamung der Verschiebung bei der Annäherung an die Ankunftsposition zu steuern.

2. Lenkradsäulenmodul gemäß Anspruch 1, **dadurch gekennzeichnet, dass** der Steuerschalter (10) derart programmiert ist, dass sich die Geschwindigkeit in der Umgebung der Ausgangsposition progressiv erhöht.

3. Lenkradsäulenmodul gemäß Anspruch 1, **dadurch gekennzeichnet, dass** der Steuerschalter (10) programmiert ist, um beim Motor (21, 22) einen Ausgleich der Abweichungen der Versorgungsspannung des Steuerschalters (10) zu gewährleisten.

4. Lenkradsäulensteuermodul gemäß Anspruch 1, **dadurch gekennzeichnet, dass** der Steuerschalter (10) programmiert ist, um eine Verschiebungsgeschwindigkeit zu steuern, die geringer ist als die maximale Geschwindigkeit bei der Annäherung an eine Endstellungsposition.

5. Lenkradsäulensteuermodul gemäß einem der vorherigen Ansprüche, **dadurch gekennzeichnet, dass** der Motor (21, 22) mit einem Sensor (31, 32) gekoppelt ist, der ein Funktionssignal der realen Geschwindigkeit des Motors (21, 22) ausgibt, wobei das genannte Signal an den genannten Steuerschalter (10) übertragen wird.

6. Lenkradsäulensteuermodul gemäß einem der vorherigen Ansprüche, **dadurch gekennzeichnet, dass** der Steuerschalter (10) die Verringerung der Verschiebungsgeschwindigkeit bei der Annäherung an die Endstellung steuert.

7. Lenkradsäulensteuermodul gemäß einem der vorherigen Ansprüche, **dadurch gekennzeichnet, dass** der Steuerschalter (10) einen Verschiebungsmodus mit reduzierter Geschwindigkeit steuert, wenn er besondere Einstellungsanweisungen erhält.

8. Lenkradsäulensteuermodul gemäß einem der vorherigen Ansprüche, **dadurch gekennzeichnet, dass** die Steuerung (10) Motorsteuersignale in Form einer im variablen zyklischen Verhältnis gehackten konstanten Spannung generiert.

9. Lenkradsäulensteuermodul gemäß einem der vorherigen Ansprüche, **dadurch gekennzeichnet, dass** der Steuerschalter (10) die variable Geschwindigkeit des Motors (21, 22) durch eine Regulierung in geschlossener Schleife steuert.

10. Lenkradsäulensteuermodul gemäß einem der vorherigen Ansprüche, **dadurch gekennzeichnet, dass** die durch den Motor (21, 22) betätigten Organe wenigstens einen Sensor der Referenzposition (41, 51, 42, 52) umfassen.
